# EUROPEAN PATENT SPECIFICATION

(11) **EP 2 565 155 B1**
(45) Date of publication and mention of the grant of the patent: **05.12.2018**
(21) Application number: 11179907.8
(22) Date of filing: 02.09.2011
(51) Int. Cl.: C01B 3/58, C10K 1/34

(54) **METHOD OF REFORMING GASIFICATION GAS**
Verfahren zur Reformierung von Vergasungsgas
Procédé de reformage de gaz de gazéification

(43) Date of publication of application: 06.03.2013
(73) Proprietor: Neste Oyj, 02150 Espoo (FI)
(72) Inventor: Simell, Pekka, 02044 VTT (FI); Kurkela, Esa, 02044 VTT (FI); Hiltunen, Ilkka, 02044 VTT (FI); Toppinen, Sami, 00730 Helsinki (FI); Eilos, Isto, 06150 Porvoo (FI)
(74) Representative: Espatent Oy

(56) References cited:
- WO-A1-2007/116121
- WO-A1-2011/107661
- US-A1- 2010 187 479

## Description

The present invention relates to a method of reforming gasification gas in accordance with the preamble of Claim 1.

According to a method of the present kind, in order to decompose organic impurities that are present in the gasification gas, the gas is contacted with a metal catalyst in a reformer in the presence of an oxidizing agent.

Oxygen blown gasification or water vapour gasification of biomass, such as wood, peat, straw or logging waste, generates gas which comprises hydrogen approximately 35 to 45 % by volume, carbon monoxide 20 to 30 % by volume, carbon dioxide 15 to 25 % by volume, methane approximately 8 to 12 % by volume, and nitrogen 3 to 5 % by volume. It is possible to use this gas as, among others, a synthesis gas for producing diesel-category fuels. Steam/oxygen gasification of biomass is an interesting alternative economically, as long as the scale of operation is large enough.

The problems with gasification are the great variations in gas composition and percentage of impurities. It is possible to purify gasification gas efficiently from tarry impurities and ammonia which are contained in it by using catalysts at a high temperature. Examples of catalysts which are suitable for decomposing tar are nickel catalysts and dolomites, the operating temperatures of which are at minimum 800-900 °C. With regard to the known technology, we refer to the publication by Simell, P: Catalytic hot gas cleaning of gasification gas. VTT Publications No. 330, Espoo 1997.

A zirconium catalyst (cf. FI Patent No. 110691), which has been developed by VTT Technical Research Centre of Finland, also works efficiently in decomposing tars, especially heavier hydrocarbons. In addition, the zirconium catalyst enables the use of a considerably wider temperature range than does a nickel catalyst, i.e. a temperature range of 600 to 900 °C.

In particular, when using nickel catalysts, the high temperature required presents a problem, as does, in part, also the tendency caused by the temperature to form soot (coke) during the process of the catalytic gas conditioning. The coking problem is further made worse in applications of synthesis gas, in which also light hydrocarbons (e.g. methane) should be reformed as efficiently as possible. In this case, the metal catalysts, especially nickel, must be used at very high temperatures (950 to 1100 °C). The generation of soot causes accumulations of carbon deposits on the catalysts and the reactor, and may eventually result in clogging the whole reactor.

At the start-up of the gasification process, the use of nickel or other metal catalysts presents problems, too, because the temperature in the catalytic unit is relatively low, below 700 °C. During the start-up, the operation of the gasifier also may occasionally be unstable, and the tar content of the product gas may then occasionally rise extremely high. These conditions may together cause an accumulation of carbon on the nickel catalyst and clogging of the catalyst reactor, and accelerate deactivation of the nickel catalyst.

A catalytic reformer, which is used in the purification of gasification gas, is generally heated by using partial oxidation (partial combustion) of the gas before the catalyst bed or in the catalyst bed, in which case the process is called "autothermal reforming". After the gas is oxidized, its temperature increases considerably, in which case also thermal side reactions, i.e. coking, takes place to a growing extent.

It is possible to reduce the coking of the metal catalyst in the reformer by using phased reforming. "Phased reforming" means that the reforming is carried out in several stages, i.e. several sequential catalyst zones, in which two or more catalysts are used.

According to Published International Patent Application WO 2007116121 (Multiple Stage Method of Reforming a Gas Containing Tarry Impurities Employing a Zirconium-Based Catalyst, inventors: P. Simell and E. Kurkela), in the first stage of a phased reformer ("pre-reforming stage" or "pre-reformer"), a zirconium catalyst is used. While the gas is being partly oxidized in the zirconium catalyst, the heaviest tar compounds are decomposed into gas components. Almost no carbon is generated in the zirconium catalyst and, consequently, no carbon blockage of the reactor takes place.

However, results of the trial runs which were carried out show that the use of a zirconium catalyst in the pre-reformer does not always reduce the generation of coke adequately. This applies in cases where very high temperatures (over 900 °C) are required in the secondary stage. Such occasions occur for example in applications of synthesis gasification in which a nickel catalyst must be used at high temperatures for the actual reforming.

In conditions such as these, to ensure the functionality of the process, it is most important to prevent the generation of coke in the first catalyst layers (preliminary reforming stage).

It has also been found that the capability of zirconium containing catalysts to achieve decomposition of tarry compounds is dependent on temperature and that particularly good results are reached at relatively low temperatures (about 500 to 700 °C).

Based on the above, it is an aim of the present invention to remove some of the disadvantages associated with known technology and to provide a completely new solution for treating gasification gas. Generally, the present invention is based on the finding that the organic impurities (tar and light hydrocarbons, such as ethylene and butadiene) which are contained in the gasification gas are decomposed in a catalytic reformer at a temperature of approximately 500 to 900 °C, and in the presence of a precious metal catalyst, preceded upstream of a zirconium based catalyst.

In practice, this can be carried out by feeding the gasification gas into a multi-stage reforming process comprising, in a cascade, at least a first catalytic reforming zone, in which a zirconium containing catalyst is used, a second catalytic reforming zone, in which a noble metal catalyst is used, and a third catalytic reforming zone, in which a metal catalyst is used. The first and second catalytic reforming zones, forming a preliminary reforming zone, will contribute to a clear reduction in the coking of the catalyst of the third reforming zone.

During operation, an oxidizing agent, such as oxygen gas, is typically mixed with the feed to the first catalytic reforming zone. In addition, an oxidizing agent, such as oxygen gas, optionally in combination with steam, is separately fed to the second catalytic reforming zone, and preferably also into the third catalytic reforming zone.

More specifically, the method according to the present invention is mainly characterized by what is stated in the characterizing part of Claim 1.

Considerable advantages are achieved with the present invention. Thus, the use of a cascade of catalyst beds with zirconium containing catalyst(s) and noble metal catalyst(s) reduces the risk of deactivation of the subsequent metal catalysts and, consequently, increases the operating life of this reforming catalyst. If the reactions for generating carbon are prevented or considerably delayed, also clogging of the reactor, caused by the generation of coke, is prevented. It is possible to utilize this solution in all such power plants or chemical industry processes that are based on gasification and in which the gas is not allowed to comprise tars. Examples of such processes are the production of electricity from gasification gas by using an engine or a turbine (IGCC), and the production of synthesis gas, for example for synthesis of fuels or methanol.

By feeding additional oxygen to the second and third reforming zones the temperature profile of the novel multiple stage reforming method can be efficiently controlled and adjusted, and it has been found that the concentrations of naphthalenes and benzene can be greatly reduced.

Enhanced decomposition of tars will allow for the use of higher pressures/lower temperatures in the gasifier which increases the economy and capacity of the process, in particularly if the gasification/reforming stages are combined with a Fischer-Tropsch process. Low temperature gasification typically produces high tar content. By the present invention, especially tar conversions are increased remarkably which means higher yields for the whole process and less blocking problems at the further processing units for the syngas (gas ultrafine cleaning and conditioning).

In the following, the present invention will be examined in more detail with the help of a detailed explanation with the reference to the accompanying drawings.
Figure 1 shows a simplified process flowchart of an embodiment;
Figure 2 shows tar content at reformer inlet, after the 1st stage of the reformer and at the outlet for the test reported in Example 1; and
Figure 3 shows in graphical form the conversion of naphthalene as a function of pressure (cf. Example 2).

As already briefly discussed above, the present invention relates to treatment of gasification gas by reforming. In particular, in the present solution, the reforming is carried out in several steps in a multiple stage reforming process.

Typically, gas obtained by, e.g. gasification of biomass, is conducted to a preliminary reforming stage, in which light hydrocarbons that are contained in the gasification gas, and the heaviest tar compounds that appear as intermediate products, are decomposed. Light compounds which are to be decomposed are in particular unsaturated C₁-C₆ hydrocarbons, i.e. olefinic hydrocarbons. Examples of these are C₁-C₆ hydrocarbons, such as ethylene and butadiene, which comprise one or two double-bonds. After the preliminary stage, the effluent is conducted to a secondary reforming stage wherein it is contacted with the actual reforming catalyst, viz. a metal catalyst, such as a nickel or a noble metal catalyst.

The preliminary reforming stage comprises in a cascade at least a first catalyst zone and a second catalyst zone.

The preliminary reforming stage is further carried out in the presence of an oxidizing agent, whereby heat is generated in the reaction, which heat can be utilized in the actual reforming stage. Preferably, the oxidizing agent is fed into the gasification gas before this agent is led into the pre-reforming stage.

According to a preferred embodiment, an oxidizing agent (in particular oxygen gas) is fed into the second stage of the pre-reforming also. Typically, it is possible to feed the oxidizing agent, as an intermediate feed, into the effluent of the first stage, before the effluent is conducted into the second stage.

Furthermore, an oxidizing agent is preferably also fed into the third stage of the reforming process, i.e. into the secondary reforming carried out in the presence of a metal catalyst. In this particular context, the preliminary reforming stage is especially important because the role of light olefinic hydrocarbons and tar compounds in generating coke becomes more pronounced when the temperature of the gas increases greatly after the pre-reforming zone - this is the case when oxygen is fed into the secondary stage of the reformer.

In all the applications above, for example air, oxygen or a mixture thereof is used as an oxidizing agent. Thus, the oxidizing agent can be used as such, e.g., in the form of pure or purified oxygen gas.

It is particularly preferred to mix the oxidizing agent, such as oxygen, which is being fed into either of the second and third catalyst zones, preferably both, with a protective component, in practice a protective gas, such as steam. By using such a component it is possible to protect any steel constructions against the overheating due to oxygen feed.

The molar proportions between oxygen and water steam in the gas intermittently fed into the reforming process varies freely; typically the ratio is in the range of about 0.01:1 to 1:0.01. Generally, it is preferred to have a molar ratio of about 0.1:1 to 1:0.1 for oxygen-to-steam, 0.5:1 to 1:0.5.

In the various steps, the feed of oxidizing agent can freely be selected. The amounts will vary depending on the composition of the gasification gas which is being treated. A person skilled in the art will be able to select an amount which meets the preselected temperature range of each catalyst bed zone/catalyst bed. Based on this, the molar feed of oxygen as an oxidizing agent into the first, second and optionally third catalyst zones will in each step be in the range of 0.01 to 99 %, 1 to 70 %, of the total feed of oxygen into the total reformer. Typically, the oxygen fed together with the syngas into the first catalyst bed zone will be about 0.1 to 90 mole-%, preferably 1 to 50 mole-%, of the total oxygen feed.

The temperature of the preliminary reforming stage is in the range of 500 to 900 °C. In particular, it is preferred to operate the first catalytic reforming zone at a temperature of about 500 to 700 °C and the second catalytic reforming zone at a temperature of about 800 to 900 °C. By selecting an operational temperature within the above temperature ranges, it is possible to further improve tar conversion. Feeding oxygen, optionally mixed with a protecting gas such as steam, facilitates the reaching of the preselected temperature.
The temperature range of the secondary stage may overlap the temperature of the preliminary stage. However, in most cases, the temperature of the secondary reforming stage is higher than the temperature of the preliminary reforming stage. According to one embodiment, the operation in the metal catalyst reforming zone is carried out at a temperature above 900 °C, for example at a temperature which is above 900 °C but typically below 1500 °C.

The preliminary reforming zone, formed by the first and the second zones, comprises at least one zirconium containing catalyst zone and at least one precious metal catalyst zone. The zirconium containing catalyst zone is arranged upstream of the precious (noble) metal catalyst zone.

The zirconium containing catalyst typically contains zirconium oxide. It is possible to produce the zirconium catalyst, from zirconium oxide (ZrO₂), which is alloyed with another metal oxide, such as aluminum oxide (Al₂O₃). The percentage of zirconium oxide or a corresponding zirconium compound in the alloy is then preferably more than 50 % of the weight of the alloy.
The zirconium compound can be on the surface of an inert support, or impregnated into the support. It can also be the coating of a ceramic or metallic honeycomb.
With regard to the use and production of the zirconium containing catalyst, we refer to FI Patent No. 110691 and WO 2007116121.

In the present solution, the zirconium containing catalyst decomposes the heaviest tar compounds which generate carbon, and it enhances the operation of both the noble metal catalyst and the secondary stage of the reformer.
In the second zone of the preliminary reforming stage and, possibly, in the actual reforming, a noble metal, in the following also called a "precious metal", catalyst is used, the metal of which is chosen from the metals of groups 8 to 10 in the periodic table. In particular, at least one metal of the groups 8 to 10 in the periodic table, such as Ru, Rh, Pd or Pt, acts as the noble metal catalyst. This precious metal catalyst can be used as a single component or as a combination of two or more metals.
In principle, it is possible to use self-supporting metal catalysts, but bearing in mind the price of these metals, for example, and their mechanical resistance it is economical to use a supported catalyst. Thus, typically, metals function on the surface of a support, such as for example on the surface of aluminum oxide or zirconium oxide. Their percentage in the carrier can be within the range of 0.01 to 20 % by weight, most preferably 0.1 to 5 % by weight, calculated from the weight of the support.
It is possible to produce precious metal catalysts (both for the pre-reforming and for the actual reforming) in a way which is known *per se.* The metals can be added into the support using any method which can be applied in the production of catalysts. An example of these is impregnation into the carrier. Typically, the impregnation is carried out by dispersing or by dissolving the metal or its precursor into a suitable medium, from which the metal is attached to the support by the process of precipitating or layering. It is also possible to bring the metal or its precursor to the support from a vapour phase, either by condensing the compound onto the surface or by binding it directly from the vapour phase to the support by means of chemisorption.
The support (which also can be called "carrier"), in turn, can form a coating (washcoat) for instance on a particle or on a ceramic or a metallic honeycomb. It is also possible that a honeycomb or a particle works as such, i.e. without a washcoat layer, as a support of noble metals.
The third catalytic reforming zone comprises a metal reforming catalyst. As mentioned above, the "metal catalyst" can be a precious metal catalyst as explained above in connection with the second catalytic reforming zone. Alternatively, it can also comprise a nickel catalyst, especially a Ni/C catalyst, as the actual reforming catalyst, as described in the publication by Simell, P., Catalytic hot gas cleaning of gasification gas. VTT Publications No. 330. Espoo 1997.

A process according to the present invention can comprise several catalyst beds within each catalytic zone. Thus, it is possible to arrange the zirconium containing catalyst, the precious metal catalyst and the metal catalyst (or the third zone) in several catalyst beds which are arranged in series in the direction of the gas flow. Basically the catalyst beds of one catalyst zone can be mutually similar or identical, but it is also possible to provide catalyst beds having catalysts materials with different properties.
In one embodiment, the metal catalyst of any upstream beds within the third catalyst zone has lower catalyst activity than the catalyst material downstream. Thus, it is possible to arrange at least two catalyst beds in the third reforming zone such that in the flow direction the first bed comprises a nickel or cobalt, preferably nickel, catalyst and the second bed comprises a precious metal having higher activity than the nickel or cobalt catalyst.
Between the catalyst beds, a heat recovery device can be arranged. In that case, either the catalyst zones can have catalyst beds all of which comprise the same noble metals, or different catalysts, for example different noble metals can be used in the beds of sequential noble metal catalysts.

The second and the third catalyst zones are arranged in that order (i.e. in the numerical order). The present invention is particularly advantageously applied to the treatment of syngas used for Fischer-Tropsch or methanol synthesis.
The effluent obtained from the reformer outlet is, typically after the described reforming step, conducted to a gas-processing step which can be for example a gas cooling step; a step in which the gas is filtered to remove any remaining fines; a step in which the gas is subjected to gas washing with a physical or chemical washing means; a treatment in a catalyst guard bed or in a similar membrane or ion-exchange device; a step in which the proportion of hydrogen to carbon monoxide is changed - examples of such process include water gas shift (WGS) reactions and reversed water gas shift (RWGS) reactions; a step in which at least a part of gaseous components, such as carbon dioxide is removed; or to a combination of two or several of these treatment steps. Thus, a reforming unit of the kind described below can be combined with an apparatus suitable for carrying out any of the listed additional gas-processing steps.
In one embodiment, impurities are removed from the gas by gas washing using for example a copper sulphate containing washing liquid.
In another embodiment, impurities are removed from the gas by gas washing using a combination of copper sulphate and methanol.

In a further embodiment, Impurities are removed from the gas by gas washing using a combination of copper sulphate and an alkaline agent (e.g. an amine).
Suitable gas washing methods are disclosed in co-pending patent application EP No. 11153704.9 (Method of Purifying Gas), filed on 2 February 2011 .

In a particularly preferred embodiment, tarry compounds including naphthalene and benzene are removed by any of the above steps or by other suitable gas washing steps.

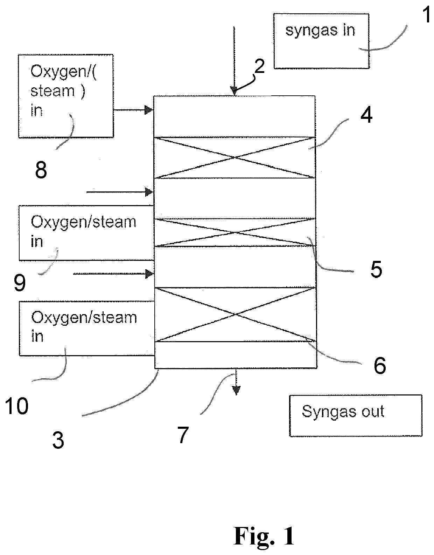

In the following, the embodiment according to Figure 1 will be examined more closely. The reformer is designated reference numeral 3. The reformer is constituted by a preliminary reforming zone 4, 5 which comprises a zirconium zone and a precious metal zone, and a secondary reforming zone 6 which comprises a metal catalyst, such as nickel. The reforming unit has a feed nozzle 2 for introduction of the gasification gas, and an outlet pipe 7 for removing the reformed gas.
The feed of the reformer comprises syngas 1. This gas which comprises, among others, hydrogen and carbon monoxide is typically generated in a gasifier (not shown), from a gasifiable fuel, such as biomass, with the help of a gasifying material. Air, oxygen or water vapour, or a mixture of two or more of these, acts as the gasifying material. The gasifying material is fed into the gasifier from below and the fuel, which is heavier than air, from above. The gasifier can be a fluidised bed reactor, a circulating mass reactor or a similar reactor.
Before the syngas is led into the reforming zone, an oxidizing agent 8 is fed into the gasification gas in order to generate reforming. If needed, any particles contained in the syngas are separated already in this stage, or before the oxidizing component is added, generally always before the first reforming stage.
The gas is conducted from the upper part of the reactor 3, via a feed pipe 2 into the zirconium material zone 4 of the reformer, in which it is possible to efficiently purify the gasification gas of tarry impurities and ammonia contained in it by using catalysts at a high temperature.

As shown in the drawing, the preliminary reforming zone comprises two subsequent catalyst zones 4, 5, the first of which is a zirconium catalyst layer 4 and the second is a noble metal catalyst layer 5.

The pre-reforming zone 4, 5 is installed in the direction of the gas flow in a position before the reforming catalyst 6, as shown in the drawing.

The oxidizing agent 8, such as oxygen gas, can be fed as such at the top of the reactor, but it can also be mixed with (water) steam before it is contacted with the syngas.

It has been found that for attaining good tar conversion in the zirconia zone, the temperature should be about 500 to 700 °C, preferably about 600 °C.

Additional oxidizing component (in particular oxygen gas) 9 is fed into the gaseous effluent of the first catalyst zone before it is conducted into the next catalyst zone, in the case shown in the drawing the precious metal catalyst zone 5. As a result, in the precious metal catalyst zone, the temperature can be raised to about 800 to 900 °C to achieve high tar conversion. The oxygen is diluted with steam to reduce the risk of damage caused to metal structures by oxygen feed in combination with high temperatures (temperatures in excess of 700 °C.

Downstream of the preliminary reforming zone, the effluent is conducted to the secondary reforming catalytic zone 6, which comprises nickel catalyst or another similar reforming catalyst.

As above, it is preferred to feed oxygen or air or other oxidizing component mixed with steam or another protective gas component 10 into the effluent of the previous catalytic zone 5 before it is fed into the metal catalytic zone 6. By addition feed of oxidizing component, the temperature can be raised to 900 °C before the metal catalytic zone 6, and inside the zone it typically increases to a maximum temperature of about 950 to 980 °C. After it has attained the maximum point, due to endothermic conditions, the temperature typically drops to below 900 °C, in particular about 850 to 870 °C.

Although not explicitly shown in Figure 1, each of the above catalytic zones can be divided into several successive catalyst beds, as already mentioned above. There can be additional feed of oxidizing component between such beds, as well.

In a particularly preferred embodiment, the metal catalyst zone 6, for example nickel catalyst zone, is divided into separate zones between which additional oxygen/steam is fed. The performance of a metal catalyst such as nickel is generally poor below 900 °C if there are high sulphur levels in the syngas; for example in wood derived syngas, the sulphur levels can be about 50 to 300 ppm as H₂S. In such cases it is particularly advantageous to arrange a metal catalyst having higher activity at the bottom of the metal zone (i.e. downstream of the feed). This highly active catalyst can be a precious metal catalyst, for example one which is of the same kind as in catalyst zone 5.

Naturally, the metal catalyst zone 6 can be divided in one or more zones in such a way that each one is constituted by noble metal catalyst layers and nickel catalyst layers.

The treatment of the gas can be carried out in separate reactors, too, which are positioned in relation to the gas flow as described above.

During the reformation which takes place in the first two catalyst zone, the zirconia and noble metal catalyst zones, the light intermediate product compounds, for example ethylene and butadiene, which form carbon and very heavy tar compounds, are decomposed.

Space velocity of the gas in the reformer is 500 to 50 000 1/h, preferably approximately 1000 to 20 000 1/h.

The effluent of the reformation is of sufficient quality as a synthesis gas for diesel-category fuels or corresponding hydrocarbons. The effluent is led through the outlet pipe 7 to further processing. In one embodiment, the outlet pipe 7 can be connected to a synthesis gas FT reactor (not shown).

### Example 1

### Pilot scale test

Feed gas was generated in a pilot scale gasifier using wood residual feed stock and oxygen blown gasifying. The reformer consisted of three different catalyst beds, viz. a Zr-catalyst bed at top, a precious metal catalyst in the middle and a nickel catalyst in bottom.

Syngas and oxygen feed were introduced to the top of the reactor and steam diluted oxygen feed between Zr- catalyst and precious metal catalyst and between precious metal catalyst and nickel catalyst layers.

The particle form Zr-catalyst layer was operated at a temperature in the range from 500 to 600 °C. Feed NTP-WHSV was 5000/h

The particle form precious metal catalyst layer was operated at a temperature in the range from 850 to 900 °C. Catalyst NTP-WHSV was 15000/h.

The peak temperature of the particle form nickel catalyst peak temperature was between 950 to 1000 °C and gas outlet temperature was 850 to 900 °C. Catalyst NTP-WHSV was 5000/h

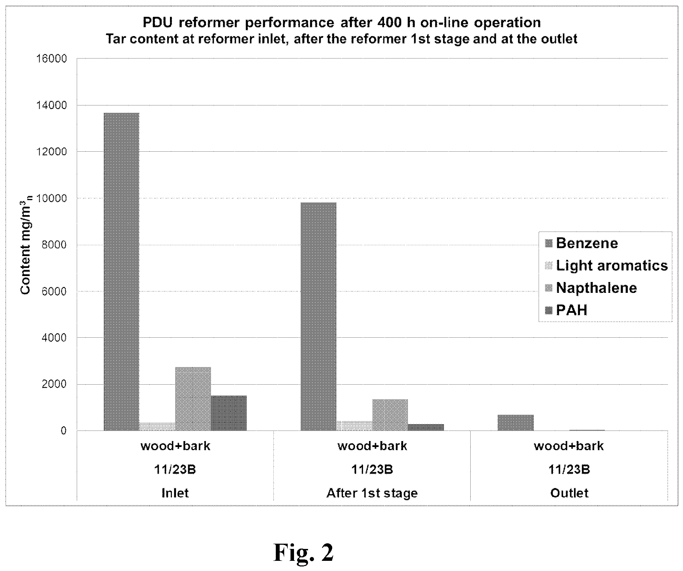

Operating pressure was from 4 to 6 bar(a). Over 400 operating hours was achived with this configuration in two separate two week long test periods. The operation of the reformer was stable, temperatures could be controlled better that in two stage reformer, especially during process disturbances. Tar conversions were very high and stable during the whole test series. No soot or other deposits were observed after the test on the catalyst surfaces. Test results at typical conditions after 400 h operation are presented in Figure 2.

### Example 2

### Laboratory test

The optimal operation conditions for the first stage zirconia catalyst were determined by microreactor fed with bottle gases. The dry composition of the feed gas was (vol.-%): CO 25 %, CO₂ 20 %, H₂ 35 %, CH₄ 10 %, N₂ 8 % and as impurities C₂H₄ 20000 vol.-ppm, NH₃ 2000 vol.-ppm, H₂S 100 vol.-ppm, tar 20 g (Nm³).

The tar composition was 80 mass-% toluene, benzene 10 mass-% and naphthalene 10 mass-%

The total feed flow rate to microreactor was 1.20 normal litres/min

The La-doped ZrO2 monolith catalyst was packed to a quartz reactor

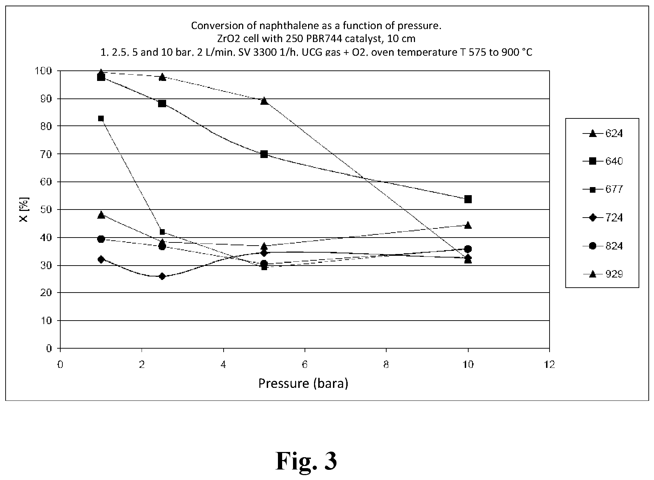

The naphthalene results shown in Figure 3 indicates that the optimum operation temperature is 600 °C.

### Example 3

The reactor set up was as shown in Figure 1 except that no oxygen/steam was fed between the zirconium catalyst and the precious metal zones.

**Reformer temperature:**

| | | | |
|---|---|---|---|
| Zr catalyst zone | | 845 °C (in the middle) | |
| Precious metal catalyst zone | | 845 °C (in the middle) | |
| Nickel catalyst zone | | 970 °C (maximum point) | |
| Reformer pressure 4 bar(a) | | | |
| Tar concentrations mg/m³n (dry gas) | | | |
| | | | |

| | reformer feed | after precious metal | reformer effluent |
|---|---|---|---|
| benzene | 11200 | 7100 | 960 |
| naphthalene | 2300 | 1200 | nd |
| heavy PAH | 1800 | 100 | nd |
| | | | |
| Benzene conversion 91 % | | | |

### Example 4

The reactor set up was as shown in Figure 1 (oxygen/steam feed between the zirconium catalyst and the precious metal zones.

**Reformer temperature:**

| | | | |
|---|---|---|---|
| Zr catalyst zone | | 600 °C (in the middle) | |
| Precious metal catalyst zone | | 845 °C (in the middle) | |
| Nickel catalyst zone | | 970 °C (maximum point) | |
| Reformer pressure 4 bar(a) | | | |
| Tar concentrations mg/m³n (dry gas) | | | |
| | | | |

| | reformer feed | after precious metal | reformer effluent |
|---|---|---|---|
| benzene | 8600 | 7000 | 200 |
| naphthalene | 1800 | 700 | nd |
| heavy PAH | 500 | 10 | nd |
| | | | |
| Benzene conversion 98 % | | | |

## Claims

1. A method of reforming gasification gas, in order to decompose organic impurities comprised in it, said gas being contacted with a metal catalyst in the presence of an oxidizing agent, and wherein reforming is carried out in several stages comprising, in a cascade, a first, a second and a third catalyst zone arranged in that numerical order;
- the first catalyst zone comprising a zirconium containing catalyst;
- the second catalyst zone comprising a precious metal catalyst; and
- the third catalyst zone comprising a metal catalyst, wherein said third catalyst zone comprises a precious metal catalyst or a nickel catalyst; or wherein said third catalyst zone comprises at least two catalysts beds such that in the flow direction the first bed comprises a nickel or cobalt catalyst and the second bed comprises a precious metal having higher activity than the nickel or cobalt catalyst;
said oxidizing agent being separately fed into each of said catalyst zones, wherein the temperature of the first catalyst zone is about 500 to 700 °C, the temperature of the second catalyst zone is about 750 to 900 °C and the temperature of the third catalyst zone is about 900 to 1000 °C.

2. The method according claim 1, wherein air, oxygen or a mixture thereof is used as the oxidizing agent.

3. The method according to any of the preceding claims, wherein the oxidizing agent fed into at least one of the catalyst zones is mixed with steam or other protective component, in particular the oxidizing agent fed into the second and the third catalyst zones is mixed with steam, whereas the oxidizing agent fed into the first catalyst zone is preferably fed as such in essentially pure or purified form.

4. The method according to any of the preceding claims, wherein at least one of the catalyst zones comprises a plurality of catalyst beds, optionally arranged with intermittent feed of oxidizing component, possibly mixed with steam.

5. The method according to any of the preceding claims, wherein the zirconium catalyst stage comprises a zirconium catalyst which is arranged upstream of the second catalyst zone in order to protect the precious metal catalyst from coking.

6. The method according to claim 5, wherein the zirconium catalyst comprises a zirconium compound, such as zirconium oxide (ZrO₂).

7. The method according to claim 6, wherein the zirconium catalyst comprises zirconium oxide, which is alloyed with another metal oxide, such as aluminum oxide, or the zirconium compound is on the surface of an inert carrier or impregnated into a carrier.

8. The method according to any of the preceding claims, wherein the space velocity of the gas in the reformation is 500 to 50 000 1/h, preferably approximately1000 to 20 000 1/h.

9. The method according to any of the preceding claims, wherein at least one metal of groups 8 to 10 in the periodic table, such as Ru, Rh, Pd or Pt, either as a single component or as a combination of two or more metals, acts as the precious metal catalyst.

10. The method according to any of the preceding claims, comprising using a supported metal catalyst having a metal deposited on the surface of a support, such as aluminum oxide or zirconium oxide, in which case the percentage of the metals in the support is within the range of 0.01 to 20 % by weight, most preferably 0.1 to 5 % by weight, calculated from the weight of the support.

11. The method according to any of the preceding claims, wherein the effluent of the third catalyst zone is conducted to at least one gas processing step.

12. The method according to claim 11, wherein said gas processing step comprises a gas cooling step; a step in which the gas is filtered to remove any remaining fines; a step in which the gas is subjected to gas washing with a physical or chemical washing means; a treatment in a catalyst guard bed or in a similar membrane or ion-exchange device; a step in which the proportion of hydrogen to carbon monoxide is changed; a step in which at least a part of gaseous components; or to a combination of two or several of these treatment steps.

## Patentansprüche

1. Verfahren zur Reformierung von Vergasungsgas, um darin enthaltene organische Verunreinigungen zu zersetzen, wobei das Gas mit einem Metallkatalysator in der Gegenwart eines Oxidationsmittels in Kontakt gebracht wird, und wobei Reformierung in mehreren Stufen ausgeführt wird, die in einer Kaskade umfassen, eine erste, eine zweite und eine dritte Katalysatorzone in dieser numerischen Reihenfolge angeordnet, wobei
- die erste Katalysatorzone einen zirkoniumhaltigen Katalysator umfasst;
- die zweite Katalysatorzone einen Edelmetallkatalysator umfasst; und
- die dritte Katalysatorzone einen Metallkatalysator umfasst, wobei die dritte Metallkatalysatorzone einen Edelmetallkatalysator oder einen Nickelkatalysator umfasst;
oder
wobei die dritte Katalysatorzone zumindest zwei Katalysatorbetten umfasst derart, dass in der Flussrichtung das erste Katalysatorbett einen Nickel- oder Kobaltkatalysator umfasst und das zweite Bett ein Edelmetall mit höherer Aktivität als der Nickel- oder Kobaltkatalysator umfasst;
das Oxidationsmittel in jede der Katalysatorzonen separat eingespeist wird, wobei die Temperatur der ersten Katalysatorzone ungefähr 500 bis 700°C ist, die Temperatur der zweiten Katalysatorzone ungefähr 750 bis 900°C ist und die Temperatur der dritten Katalysatorzone ungefähr 900 bis 1000°C ist.

2. Verfahren nach Anspruch 1, wobei Luft, Sauerstoff oder eine Mischung davon als das Oxidationsmittel verwendet wird.

3. Verfahren nach einem der vorstehenden Ansprüche, wobei das in zumindest eine der Katalysatorzonen eingespeiste Oxidationsmittel mit Dampf oder anderer schützender Komponente gemischt wird, insbesondere das in die zweiten und die dritten Katalysatorzonen eingespeiste Oxidationsmittel mit Dampf wird gemischt, wobei das in die erste Katalysatorzone eingespeiste Oxidationsmittel bevorzugt eingeführt wird als solches in im Wesentlichen reiner oder gereinigter Form.

4. Verfahren nach einem der vorstehenden Ansprüche, wobei zumindest eine der Katalysatorzonen umfasst eine Vielzahl von Katalysatorbetten, optional angeordnet mit intermittierender Einspeisung von Oxidationsmittel, möglicherweise gemischt mit Dampf.

5. Verfahren nach einem der vorstehenden Ansprüche, wobei die Zirkoniumkatalysatorstufe einen Zirkoniumkatalysator umfasst, welcher stromaufwärts von der zweiten Katalysatorzone angeordnet ist, um den Edelmetallkatalysator vor Verkokung zu schützen.

6. Verfahren nach Anspruch 5, wobei der Zirkoniumkatalysator einen Zirkoniumverbindung wie zum Beispiel Zirkoniumoxid (ZᵣO₂) umfasst.

7. Verfahren nach Anspruch 6, wobei der Zirkoniumkatalysator Zirkoniumoxid umfasst, welches legiert ist mit einem anderen Metalloxid, wie zum Beispiel Aluminiumoxid, oder die Zirkoniumverbindung auf der Oberfläche eines inerten Trägers oder in einem Träger imprägniert ist.

8. Verfahren nach einem der vorstehenden Ansprüche, wobei die Raumgeschwindigkeit des Gases in der Reformierung 500 bis 50000 l/h, bevorzugt ungefähr 1000 bis 20000 l/h ist.

9. Verfahren nach einem der vorstehenden Ansprüche, wobei zumindest ein Metall von Gruppen 8 bis 10 in dem Periodensystem, wie zum Beispiel Ru, Rh, Pd oder Pt, entweder als eine einzelne Komponente oder als eine Kombination von zwei oder mehr Metallen als der Edelmetallkatalysator agiert.

10. Verfahren nach einem der vorstehenden Ansprüche, umfassend Verwendung eines geträgerten Metallkatalysators mit einem auf der Oberfläche eines Trägers abgeschiedenen Metall, wie zum Beispiel Aluminiumoxid oder Zirkoniumoxid, wobei in diesem Fall der Prozentsatz der Metalle in dem Träger innerhalb des Bereichs von 0,01 bis 20 Gew.-%, mehr bevorzugt 0,1 bis 5 Gew.-% ist, berechnet aus dem Gewicht der Unterstützung.

11. Verfahren nach einem der vorstehenden Ansprüche, wobei der Abstrom der dritten Katalysatorzone zu zumindest einem Gasverarbeitungsschritt geführt wird.

12. Verfahren nach Anspruch 11, wobei der Gasverarbeitungsschritt umfasst einen Gaskühlschritt; einen Schritt, in welchem das Gas gefiltert wird, um jedes verbleibende Feinmaterial zu entfernen; einen Schritt, in welchem das Gas einer Gaswäsche mit einer physikalischen oder chemischen Wascheinrichtung unterworfen wird; eine Behandlung in einem Katalysatorschutzbett oder in einer ähnlichen Membran oder Ionenaustauschvorrichtung; einen Schritt, in welchem das Verhältnis von Wasserstoff zu Kohlenstoffmonoxid geändert wird; einen Schritt, in welchem zumindest ein Teil von gasförmigen Komponenten; oder zu einer Kombination von zwei oder mehreren von diesen Behandlungsschritten.

## Revendications

1. Procédé de reformage d'un gaz de gazéification en vue de décomposer des impuretés organiques qu'il contient, ledit gaz étant mis en contact avec un catalyseur à base de métal en présence d'un agent d'oxydation, et dans lequel le reformage est effectué en plusieurs étages comprenant, en cascade, une première, une seconde et une troisième zone catalytique agencée dans cet ordre numérique,
- la première zone catalytique comprenant un catalyseur contenant du zirconium;
- la seconde zone catalytique comprenant un catalyseur à base de métal précieux; et
- la troisième zone catalytique comprenant un catalyseur à base de métal, dans lequel la troisième zone catalytique comprend un catalyseur à base de métal précieux ou un catalyseur à base de nickel ; ou
dans lequel ladite troisième zone catalytique comprend au moins deux lits de catalyseur tels que, dans la direction de l'écoulement, le premier lit comprend un catalyseur à base de nickel ou de cobalt et le second lit comprend un métal précieux ayant une activité plus forte que le catalyseur à base de nickel ou de cobalt ;
ledit agent d'oxydation étant introduit séparément dans chacune desdites zones catalytiques, dans lequel la température de la première zone catalytique est d'environ 500°C à 700°C, la température de la seconde zone catalytique est d'environ 750°C à 900°C et la température de la troisième zone catalytique est d'environ 900°C à 1000°C.

2. Le procédé selon la revendication 1, dans lequel de l'air, de l'oxygène ou un mélange de ceux-ci est utilisé comme agent d'oxydation.

3. Le procédé selon l'une quelconque des revendications précédentes, dans lequel l'agent d'oxydation introduit dans au moins l'une des zones catalytiques est mélangé avec de la vapeur ou un autre agent protecteur, en particulier l'agent d'oxydation introduit dans la seconde et la troisième zones catalytiques est mélangé avec de la vapeur, tandis que l'agent d'oxydation introduit dans la première zone catalytique est de préférence introduit tel quel sous une forme essentiellement pure ou purifiée.

4. Le procédé selon l'une quelconque des revendications précédentes, dans lequel au moins l'une des zones catalytiques comprend une pluralité de lits de catalyseur, éventuellement disposés avec une alimentation intermittente en composants d'oxydation, éventuellement mélangés avec de la vapeur.

5. Le procédé selon l'une quelconque des revendications précédentes, dans lequel l'étage de catalyseur au zirconium comprend un catalyseur au zirconium qui est disposé en amont de la seconde zone de catalyseur afin de protéger le catalyseur à base de métal précieux de la cokéfaction.

6. Le procédé selon la revendication 5, dans lequel le catalyseur au zirconium comprend un composé de zirconium, tel que l'oxyde de zirconium (ZrO₂).

7. Le procédé selon la revendication 6, dans lequel le catalyseur au zirconium comprend de l'oxyde de zirconium qui est allié avec un autre oxyde métallique, tel que l'oxyde d'aluminium, ou le composé de zirconium est sur la surface d'un support inerte ou imprégné dans un support.

8. Le procédé selon l'une quelconque des revendications précédentes, dans lequel la vitesse spatiale du gaz dans la reformation est de 500l/h à 50000l/h, de préférence d'environ 1000l/h à 20000l/h.

9. Le procédé selon l'une quelconque des revendications précédentes, dans lequel au moins un métal des groupes 8 à 10 du tableau périodique, tel que Ru, Rh, Pd ou Pt, soit en tant que composant unique, soit en combinaison de deux métaux ou plus, agit comme le catalyseur à base de métal précieux.

10. Le procédé selon l'une quelconque des revendications précédentes, comprenant l'utilisation d'un catalyseur à base de métal compatible ayant un métal déposé sur la surface d'un support, tel que de l'oxyde d'aluminium ou de l'oxyde de zirconium, auquel cas le pourcentage de métaux dans le support est compris entre 0,01% et 20% en poids, de manière la plus préférable entre 0,1% et 5% en poids, calculé à partir du poids du support.

11. Le procédé selon l'une quelconque des revendications précédentes, dans lequel l'effluent de la troisième zone catalytique est introduit à au moins une étape de traitement de gaz.

12. Le procédé selon la revendication 11, dans lequel ladite étape de traitement du gaz comprend une étape de refroidissement du gaz; une étape dans laquelle le gaz est filtré pour éliminer toutes les fines restantes; une étape dans laquelle le gaz est soumis à un lavage de gaz avec un moyen de lavage physique ou chimique; un traitement dans un lit de protection catalytique ou dans une membrane ou un dispositif d'échange d'ions similaires; une étape dans laquelle la proportion d'hydrogène par rapport au monoxyde de carbone est modifiée; une étape dans laquelle au moins une partie des composants gazeux; ou à une combinaison de deux ou plusieurs de ces étapes de traitement.
